# EUROPEAN PATENT SPECIFICATION

(11) **EP 3 983 957 B1**
(45) Date of publication and mention of the grant of the patent: **08.04.2026**
(21) Application number: 20735655.1
(22) Date of filing: 12.06.2020
(51) Int. Cl.: G06N 7/00, G06N 3/045, G06N 3/047, G06N 3/08, G06N 3/0464, G06N 3/0495, G06N 3/09

(54) **METHOD AND SYSTEM FOR CONFIDENCE ESTIMATION OF A TRAINED DEEP LEARNING MODEL**
VERFAHREN UND SYSTEM ZUR KONFIDENZSCHÄTZUNG EINES TRAINIERTEN TIEFENLERNMODELLS
PROCÉDÉ ET SYSTÈME D'ESTIMATION DE CONFIANCE D'UN MODÈLE D'APPRENTISSAGE PROFOND FORMÉ

(30) Priority: 14.06.2019 GB 201908598; 27.04.2020 GB 202006166
(43) Date of publication of application: 20.04.2022
(73) Proprietor: Thinksono Ltd, Ruislip HA4 6GA (GB)
(72) Inventor: MAKROPOULOS, Antonios, Ruislip HA4 8GA (GB); KAINZ, Bernhard, Ruislip HA4 8GA (GB)
(74) Representative: Barnes IP Limited
(86) International application number: PCT/GB2020/051431
(87) International publication number: WO 2020/249972

(56) References cited:
- YICHUN SHI ET AL: "Probabilistic Face Embeddings", ARXIV.ORG, CORNELL UNIVERSITY LIBRARY, 201 OLIN LIBRARY CORNELL UNIVERSITY ITHACA, NY 14853, 21 April 2019 (2019-04-21), XP081457074

## Description

### Field

The present invention relates to a method and system of determining a measure of confidence for a trained deep learning model. Further, the present invention relates to a method and system of predicting a measure of confidence for a trained deep learning model using the latent variables of the trained deep learning network.

### Background

Machine learning approaches, and in particular deep learning approaches, are being applied to a variety of different applications and fields, including for example in natural language processing (NLP), self-driving vehicles, computer vision applications, and healthcare (including for example radiology).

Each of these example applications require a high degree of trust by their operators and end-users of such implementations. However, once trained, deep learning systems make predictions regardless of the suitability of the input data provided to the trained model. For example, a deep learning model trained for cancer detection in humans from x-rays will also perform classification on random images input into the model, such as for example images from animals, and will therefore output a classification of for example the animal image being pathological or healthy with the same confidence as for human images with which it is intended to be used.

As a result of this model behaviour, there can be reliability and trust issues with such systems being used in real-world applications. Human observers will typically be able to naturally filter inputs when making assessments, for example to identify ambiguous signals, or to identify input that is corrupted and thus hard to read, or simply to identify that the incorrect data is being assessed for the determination that they are being asked to make. In contrast, typical deep learning algorithms cannot provide the answer "I don't know" or its equivalent - their output is limited to the classification options they have been trained to output.

Uncertainty margins require continuous probabilistic modelling of the prior distribution of possible input and resulting posterior decision probabilities. Non-linearities and the extreme dimensionality of deep networks and deep convolutional networks make Bayesian modelling of decision processes in the networks intractable (i.e. the integration of probability density functions from the initial input to the final output becomes impossible).

Yichun Shi et al: "Probabilistic Face Embeddings", ARXIV.ORG, Cornell University Library, 201 Olin Library Cornell University Ithaca, NY 14853, 21 April 2019, XP081457074 is document relating to face recognition which describes representing each face as a Gaussian distribution in the latent space.

In US 2018/0341876 A1, it is proposed to train deep learning models by tuning parameters to optimise for accuracy and uncertainty simultaneously (by using a Monte-Carlo dropout to model prediction uncertainty with a purely Gaussian posterior distribution), but this does not allow for assessment of uncertainty in models that have not been trained in this way, for example for models trained only for accuracy, and is limited to the specific type of probability distribution disclosed. Furthermore, the entire training data set is required for such approaches. The data and model will typically be governed by different sharing policies, thus of these only the trained models will usually be available (without the underlying training data).

### Summary

Aspects and/or embodiments recite a method and/or system that, by modelling a portion of the latent space with probabilistic techniques, allows network prediction to be sampled and tested for robustness in order to derive a measure of certainty/uncertainty. This measure of certainty/uncertainty, according to aspects and/or embodiments, can be used to reject network inputs that will lead to outputs or predictions below a predetermined decision confidence threshold. Aspects and/or embodiments can augment substantially any deep learning model/network that uses an expressive and substantially small latent space (for example, having fewer than approximately 50,000 values) and substantially boost sensitivity and/or substantially boost specificity of these models/networks. Aspects and/or embodiments can provide a control mechanism for deep neural networks that can require a user-determined level of prediction confidence in the outputs of the deep neural networks.

According to a first aspect, there is provided a computer-implemented method of filtering input data to a trained radiological image classification neural network (320, 330, 360) characterised by comprising the steps of: receiving input data for the trained radiological image classification neural network (320, 330, 360); generating a prediction for the confidence value for the output of the trained radiological image classification neural network (320, 330, 360); determining whether the predicted confidence value exceeds a predetermined confidence threshold and only permitting the trained radiological image classification neural network (320, 330, 360) to process input data that exceeds the predetermined confidence threshold; wherein the step of generating the prediction for the confidence value for the output of a trained radiological image classification neural network having a given input comprises the steps of: using a probabilistic model (350) to generate a prediction of confidence for each of one or more input data to the trained radiological image classification neural network (320, 330, 360); and wherein the probabilistic model is generated by executing the steps of: observing the latent space (330) of the trained radiological image classification neural network (320, 330, 360) during inference of the trained radiological image classification neural network (320, 330, 360) and generating observations (340) of the latent space (330); and generating a probabilistic model (350) of the latent space (330) of the trained radiological image classification neural network (320, 330, 360) using the (340) observations of the latent space (330).

By modelling a latent space of a neural network, it can be possible to understand the effect of the neural network decision processes on input data.

By predicting the confidence of an output for a given input to a neural network, many further applications can be enabled in relation to neural networks that use the confidence predictions that are output.

By using the predicted confidence in the output of a neural network of a given input to a neural network, it is possible to perform filtering of the input to a neural network to restrict the input to the neural network to only data that will result in high confidence predictions using a predetermined confidence threshold value (can optionally can be adjusted).

Optionally, the method further comprises receiving the input data received by the neural network during the inference of the neural network; and wherein the generating of the probabilistic model of the latent space of the neural network using the observations of the latent space comprises generating the probabilistic model of the latent space of the neural network using the observations of the latent space and the input data received by the neural network during inference.

By using the input data as well as observations of the latent space of a neural network, a more precise model of the latent space can be generated.

Optionally, the method further comprises receiving the output of the neural network during inference of the neural network; and wherein the generating of the probabilistic model of the latent space of the neural network using the observations of the latent space comprises generating the probabilistic model of the latent space of the neural network using the observations of the latent space and the input data received by the neural network during inference and the output of the neural network during inference of the neural network.

By using the input data and output data as well as observations of the latent space of a neural network, a more precise model of the latent space can be generated.

According to a second aspect, there is provided a computer program product comprising instructions which, when the program is executed by a computer, cause the computer to perform the method of any previous aspect.

According to a third aspect, there is provided a system comprising one or more processors operated to perform the method or execute the computer program product of any preceding claim.

### Brief Description of Drawings

Embodiments will now be described, by way of example only and with reference to the accompanying drawings having like-reference numerals, in which:
Figure 1 illustrates an example deep convolutional neural network, showing the compressed latent space of the example network towards the end of the decision-making process;
Figure 2 illustrates an example generative deep convolutional neural network, showing the compressed latent space of the example deep neural network at the centre of the generative networks;
Figure 3 shows the process of training a model to probabilistically model the latent space of a deep neural network according to an embodiment;
Figure 4 shows the process of inference using a trained latent space model according to an embodiment;
Figure 5 shows an example implementation according to an embodiment;
Figure 6 shows a graph of increasing classification performance (y-axis) with increasing desired classification accuracy (x-axis) as the number of input images is reduced by changing the threshold for rejection of input images according to an embodiment;
Figure 7 shows examples from a DVT examination for images with low classification confidence and the observed likelihood for different class predictions according to an embodiment;
Figure 8 shows an example for a confident class prediction according to an embodiment; and
Figure 9 shows a representation of a projected latent space before probabilistic modelling of a three-class classification network used for vascular ultrasound image classification (left), and a representation right after probabilistic modelling (right), according to an embodiment.

### Specific Description

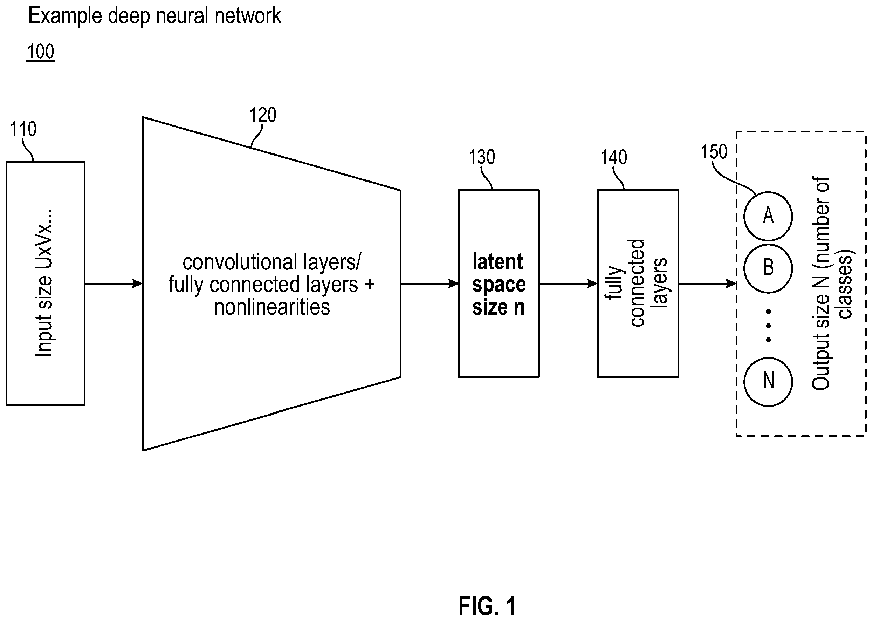

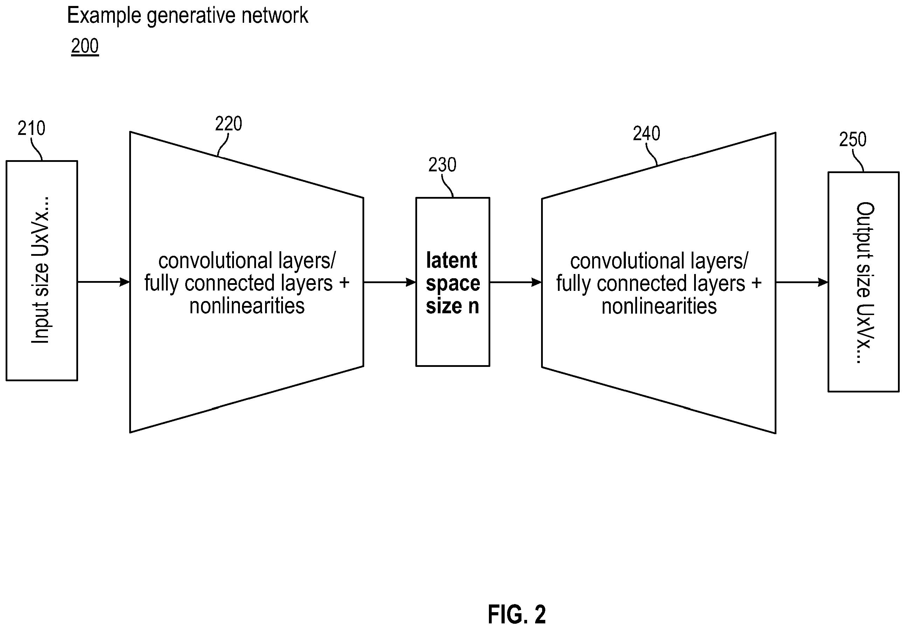

Figures 1 and 2 show examples of two different types of deep neural networks. Most deep neural networks have compressed latent spaces either towards the end of the decision-making process, or in between convolutional layers for generative networks. There is, however, no filter provided for the input data to these example deep neural networks, so the outputs of the neural networks will be those for which the networks have been trained regardless of whether the input data is correct (i.e. the correct type of input data, which the network has been trained to receive).

Referring to Figure 1, there is shown an example convolutional neural network 100 that can be used for classification. The network 100 receives input data 110, having a size/dimensions UxVx (i.e. Ux by Vx), into a set of convolutional layers with non-linear activation functions 120 (or non-linear fully connected layers). The convolutional layers 120 process the input data 110 and output the processed data into latent space 130, where the latent space 130 has a size n that is compressed in comparison to the input size UxVx. The data in the latent space 130 is input into a set of fully connected layers 140 in order to output the trained classification output 150 (having a size N representing the number of classes into which the input data 110 is classified).

The convolutional layers 120 and fully connected layers 140 are together trained to classify a certain type of input data, for example x-ray data, into one or more of a set of classifications. Supervised training of the neural network can be performed by optimising parameters or weights within the neural network using a set of training data for which the classifications are known in order to cause the neural network to output the correct classifications for the training data set.

Figure 2 shows a further example of a deep neural network, and specifically a generative convolutional neural network 200.

Again, data 210 is input into the network 200. The data 210 has a size/dimensions of UxVx (i.e. dimensions of Ux by Vx). The data 210 is provided to a first set of convolutional layers 220 (or fully connected layers) with non-linear activation functions and the convolutional layers 220 perform a sequence of operations upon the input data 210 and output data to a latent space 230. The latent space 230 is of size n, which is smaller than the size of the input data 210, i.e. the dimensions of the latent space 230 can be smaller than the dimensions of the input data 210. The second set of convolutional layers/fully connected layers and non-linearities/non-linear operations 240 then performs further operations on the data in the latent space 230 to produce output data 250 which in this example has a size of UxVx (i.e. Ux by Vx).

The two sets of convolutional layers 220, 240 are trained together to produce a certain type of output data based on a certain type of input data. Supervised training of the neural network can be performed by optimising parameters or weights within each of the sets of convolutional layers 220, 240 using a set of training data for desired outputs (for given inputs) in order to cause the neural network to output the desired outputs for the given inputs in the training data set.

Also, neural networks such as the example networks presented in Figures 1 and 2 can have multiple latent spaces, but a key characteristic is that each latent space is of a limited size (that is smaller than the input size, i.e. the dimensions of the latent space are compressed relative to the dimension of the input data), so that each latent space can be modelled fully probabilistically.

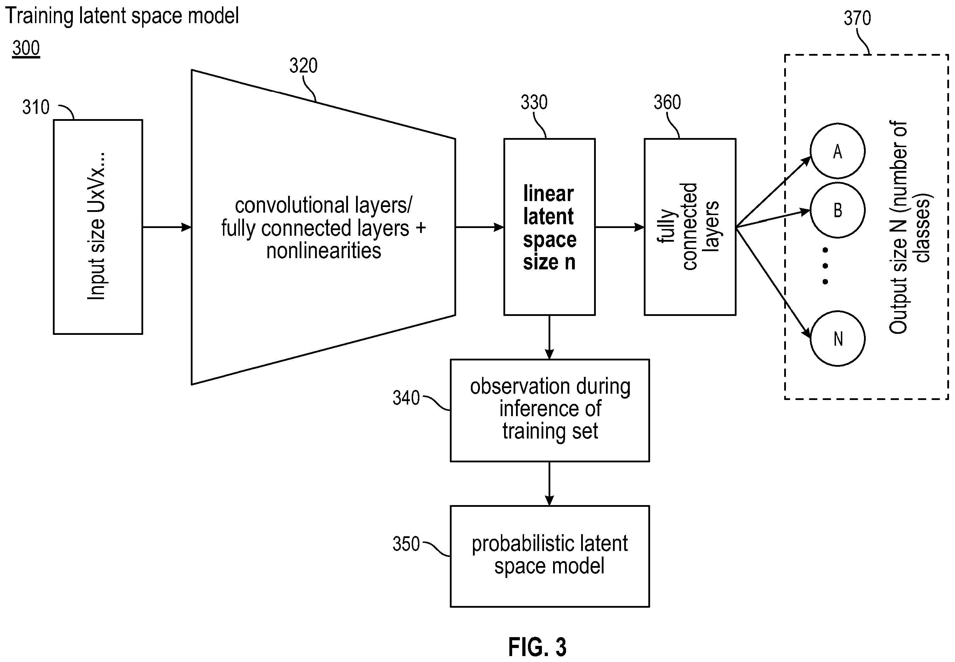

Figure 3 shows the example deep neural network 320, 330, 360 of Figure 1 and a small network 350 that is trained to encode a model of the latent variables that are produced 340 during processing of a specific task by the example network 320, 330, 360. The example deep neural network 320, 330, 360 of Figure 1 is a pre-trained model of arbitrary size.

In embodiments, the linear latent spaces 330 in deep neural network models can be modelled 350 with continuous probabilistic methods, using observations 340 of the data contained in the latent space 330 during inference by the model 320, 360, thus allowing the generation of variants of the data in this latent space 330 that are semantically close to the initial observation. This allows the variants of the data in the latent space 330 to be used to test networks 320, 360 for prediction robustness, by injecting many semantically close samples in to the networks for which variants of the data in the latent space 330 has been generated and observing the magnitude of change at the output.

Observation 340 of the data in the latent space 330 that is produced during inference of the model 320, 360 as part of the training process of the probabilistic model 350, through stochastic variational inference, yields a continuous probability density function around each value of the latent variable(s).

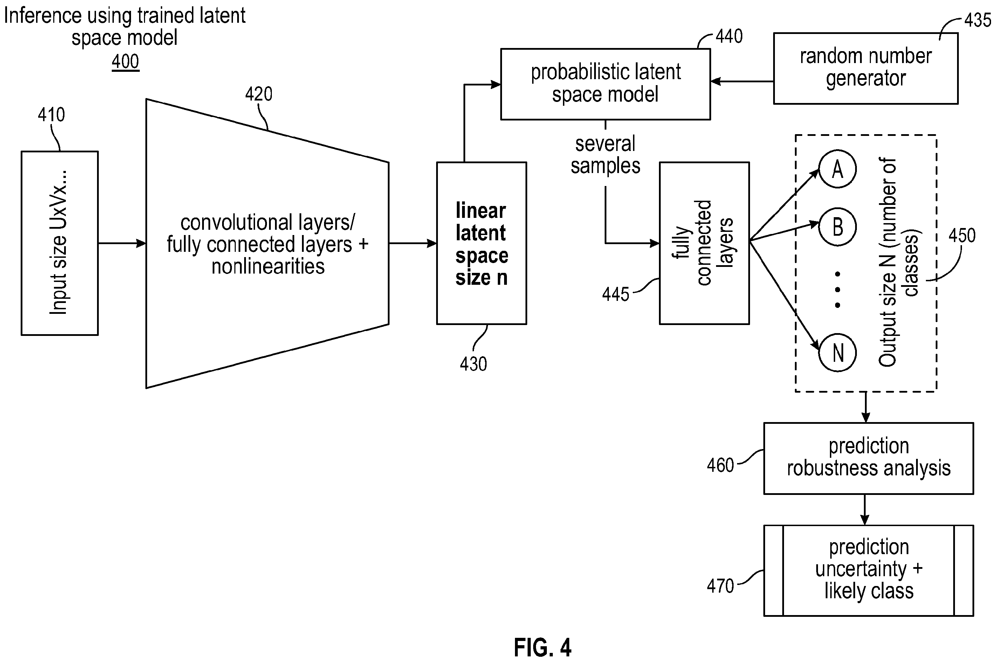

Referring now to Figure 4, there is shown the use of the trained probabilistic model 440 (the model 350 from Figure 3 once trained).

During inference of the base network 420, 430, 445, 450, the latent space 430 of the transformed input is observed and variants of the latent space 430 according to the previously learned probabilistic modelling function 440 are injected back into the network. After observing a large number of outputs based on the injected variants, frequent changes of the output 450 are assumed to indicate uncertainty, whereas in contrast no changes or minor changes are assumed to indicate robust decision making.

The approach of this embodiment can be used to build a confidence prediction system for any given deep network, or deep network-driven device, after defining an interface for the latent variables of the given deep learning model.

In some embodiments, by modelling a small part of the latent space with probabilistic techniques, network prediction can be sampled and tested for robustness. A derived uncertainty metric can subsequently be used to reject network input that will lead to predictions below a user-expected (or a predefined threshold of) decision confidence. Therefore, some embodiments augment any deep learning device that uses an expressive and small (<<50k values) latent space and boost sensitivity and specificity of these methods to 100%. This comes at the cost of an increasing number of rejected input images with increasing expected decision confidence.

These embodiments can provide users of deep neural networks with a control mechanism that substantially guarantees a desired level (i.e. above a predetermined threshold) of prediction confidence. This can be particularly useful in real-time applications, e.g. image acquisition and classification, where viewpoints can be revisited interactively until the optimal input has been found for maximum network prediction confidence.

In this embodiment, stochastic variational inference is used to approximate the real posterior probability distribution of classification decisions. In other embodiments, other methods can be used to perform the probabilistic modelling.

Further, in this embodiment, the method samples a model's latent space at the location of the predicted encoding within an observed and learned standard deviation with random offset. This leads to a set of possible latent encodings that can be injected back into the prediction process.

If the manifold of density distributions is substantially separate from other class encodings, the average of all predictions from all latent samples will be substantially identical. If the input leads to a sample in areas of large overlap with other classes, predictions will differ, and this difference can be used to define a confidence metric.

For example, in an embodiment given a continuous probability density function around the locations the individual latent variables, one hundred discrete random samples will lead to one hundred variates of the latent space. Class prediction can be performed with the remainder of the network. If, for example, ninety out of these one hundred latent spaces lead to the same prediction, one can assume that the current input will lead to predictions with a 90% certainty. For another input, if only fifty of one hundred variants will lead to the same output, this can be interpreted as a 50% certainty. Such confidence metrics can be used in a real-time application as rejection criteria, e.g. if a user wishes to accept only predictions that are at least 70% certain, then our approach will output a class prediction only if seventy out of one hundred samples lead to the same result, otherwise it will decline to predict any of the possible output classes.

In embodiments, substantially critical applications like disease diagnostics from radiologic images can benefit from such approaches by either providing the estimated network uncertainty or using it directly during image acquisition, only accepting images that will lead to highly confident decisions.

In some embodiments, this approach models a probability distribution of a network's hidden decision criteria, which means images that could be readable to human observers might be rejected when applying a filtering process to the input data of the model based on the predicted confidence of the model output for that given input. The approach only models a machine learning model's uncertainty about unseen data and not necessarily human uncertainty. To mitigate this, in some embodiments the method records annotator uncertainty and annotator image quality assessment for an example task, for example a task of predicting deep vein thrombosis from ultrasound device sensor data as the input data. By measuring the correlation between observed image quality, human decision confidence and the prediction of the networks' internal confidence estimates, some embodiments can model human observer confidence with a certain degree of correlation for the special case of DVT ultrasound image analysis based on the determined correlation from this measurement.

In some embodiments, a Monte-Carlo dropout approach is used to model prediction uncertainty with a purely Gaussian posterior distribution. In other embodiments, other types of probability distribution are used, and the approach learns an approximation of the real posterior distribution of decision processes performed by neural networks.

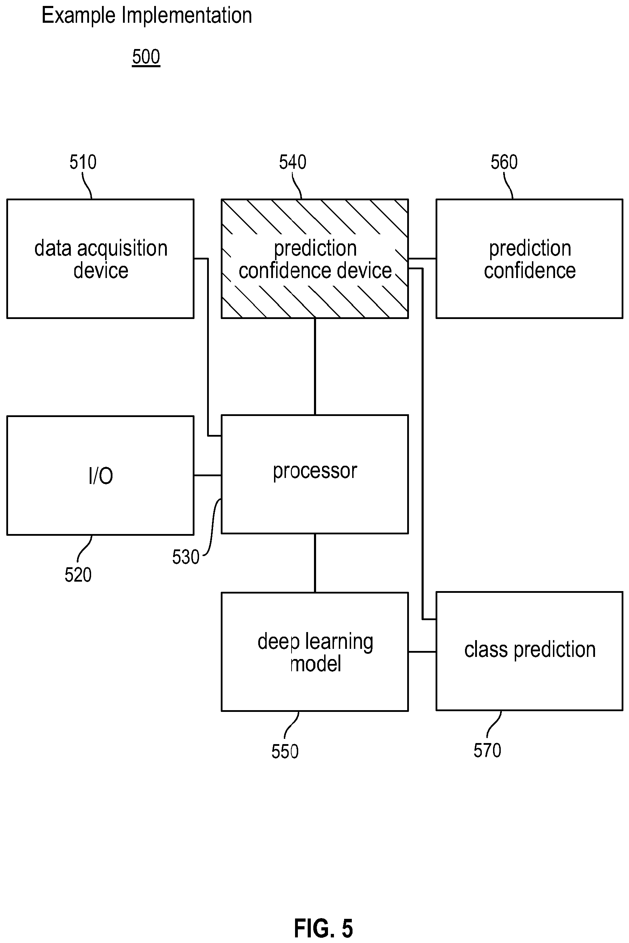

Figure 5 shows an illustration of an example implementation of a confidence prediction system according to an embodiment, for using the modelling of the latent space of a deep neural network to inject multiple variants of the latent space into the deep neural network in order to assess and/or predict output confidence.

The system is configured, using any suitable arrangement of computing hardware in a local or distributed/networked arrangement, to have a data acquisition device 510 in communication with a processor 520. The data acquisition device 510 can be a sensor (e.g. an ultrasound sensor, x-ray sensor, etc) or a dedicated separate device (e.g. an ultrasound machine, x-ray machine or mobile phone/tablet computer/laptop computer connected to a sensor or having a sensor integrated therein) from which data can be obtained for processing by the processor 530 (optionally via a memory storage or computer-readable medium).

The processor 530 is, in turn, in communication with an input/output arrangement 520 (for example a computer bus, or data networking arrangement, or anything which enable the processor to receive and transmit data to other computers, components or within a system).

The processor 530 is also in communication with a prediction confidence device 520 which can output a prediction confidence 560. The prediction confidence device 520 may be implemented as a software process that is executed by and in operation on the processor 530 or may be a standalone system or computer/process that is in communication with the processor 530 but operates independently from the processor 530.

The processor 530 is operable to execute and perform the required processing for a deep learning model 550 which outputs one or more class predictions 570, which in turn are provided to the prediction confidence device 540. Alternatively, other types of deep learning model can be used instead of, or in addition to, the deep learning model 550 that outputs other types of output than a class prediction 570.

The prediction confidence 560 can be used by the processor 530 or the deep learning model 550 or the data acquisition device 510 to filter the input data provided to the deep learning model 550 for production of a class prediction 570, by filtering the data acquired by the data acquisition device 510 at either the processor 530 or the deep learning model 550 or the data acquisition device 510 based on the prediction confidence 560 for each piece of data acquired by the data acquisition device 510.

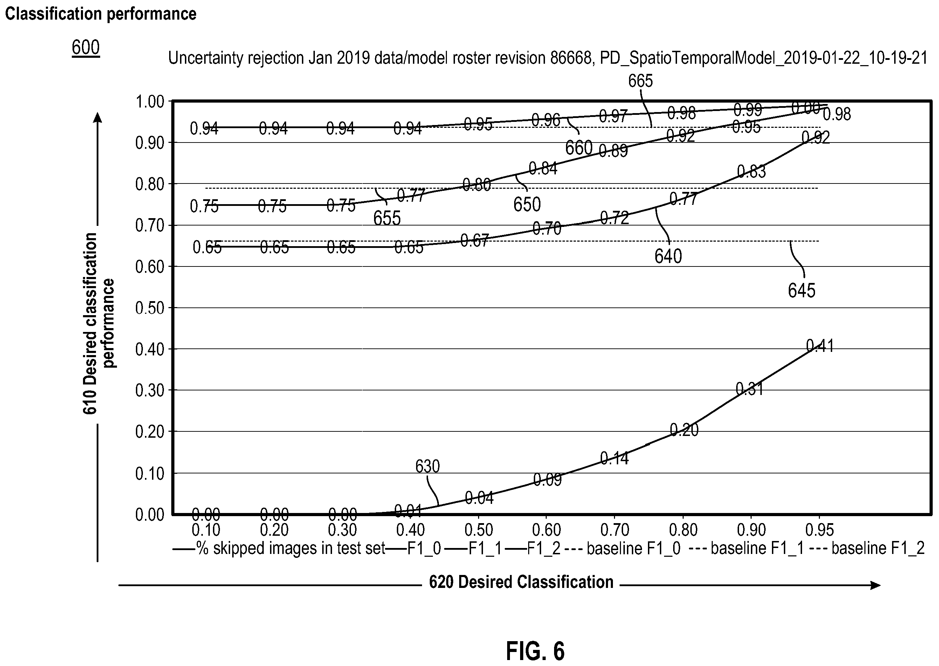

Referring now to Figure 6, some example results 600 are shown in respect of an embodiment, resulting from the testing of this approach on anatomical landmark detection during deep vein thrombosis (DVT) detection from ultrasound data as described in, for example, the following references: [1] Tanno R, Makropoulos A, Arslan S, Oktay O, Mischkewitz S, Al-Noor F, Oppenheimer J, Mandegaran R, Kainz B, Heinrich MP. Autodvt: Joint real-time classification for vein compressibility analysis in deep vein thrombosis ultrasound diagnostics. InInternational Conference on Medical Image Computing and Computer-Assisted Intervention 2018 Sep 16 (pp. 905-912). Springer, Cham; [2] Schellong SM, Schwarz T, Halbritter K, Beyer J, Siegert G, Oettler W, Schmidt B, Schroeder HE. Complete compression ultrasonography of the leg veins as a single test for the diagnosis of deep vein thrombosis. Thrombosis and haemostasis. 2003;89(02):228-34; and [3] Lensing AW, Doris Cl, McGrath FP, Cogo A, Sabine MJ, Ginsberg J, Prandoni P, Turpie AG, Hirsh J. A comparison of compression ultrasound with color Doppler ultrasound for the diagnosis of symptomless postoperative deep vein thrombosis. Archives of internal medicine. 1997 Apr 14;157(7):765-8.

When modelling the latent space of the plane detector probabilistically in the embodiment, one hundred samples re-injected into the decision process of the deep learning model and the observation of the change in the output of the model would allow the filtering of the input data 630 to control detection accuracies to reach almost 100%.

Specifically, the graph 600 shows increasing classification performance 610 (y-axis) with increasing desired classification accuracy 620 (x-axis). The lowest curve 630 (i.e. lower on the y-axis than the other curves) shows the number of images for which the network refused to predict because of the target confidence threshold (x-axis). The three curves 640, 650, 660 that are plotted on the graph 600 show evidence that the correct images are identified as uncertain or not sufficient for a confident prediction with increasing accuracy as the threshold for input data rejection is increased as shown in the lowest curve 630, since classification performance increases and never decreases (which would be the case if random images would be selected and deliberately input into the model). Specifically, three sets of data are shown 640, 650, 660 against the baseline performance for each set of data 645, 655, 665.

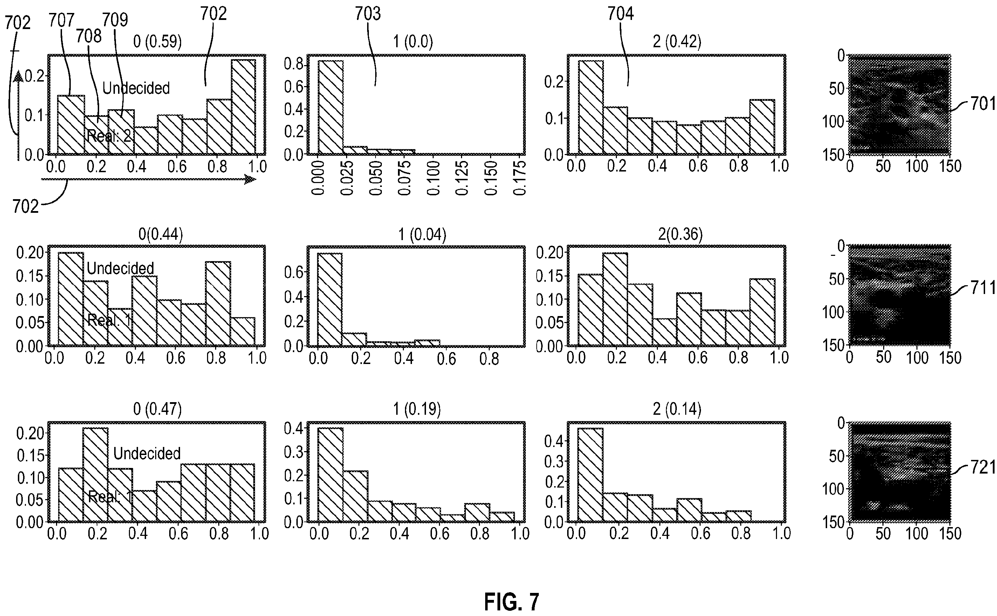

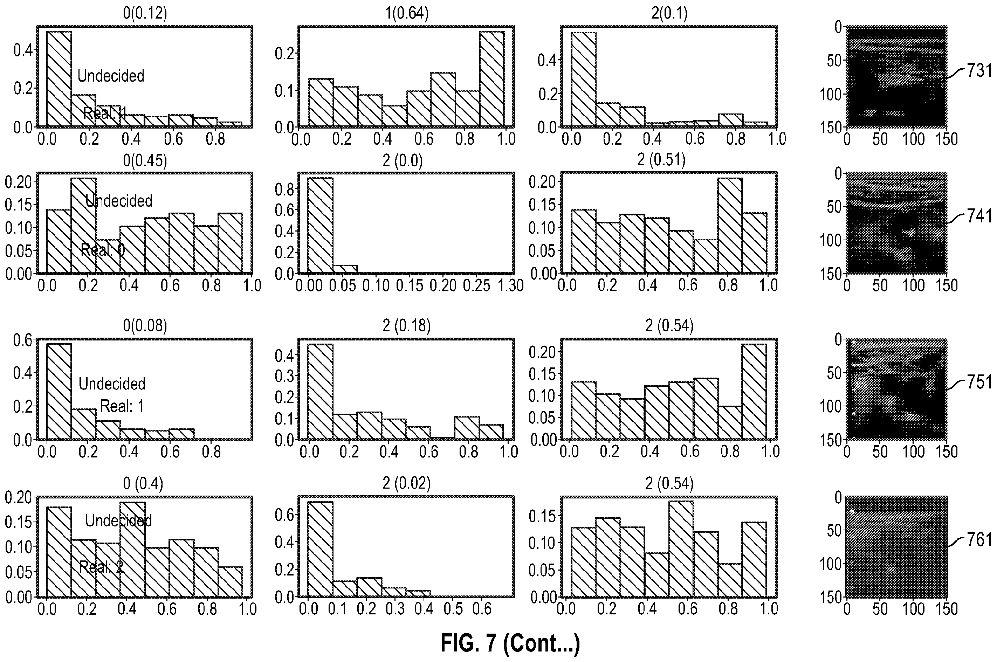

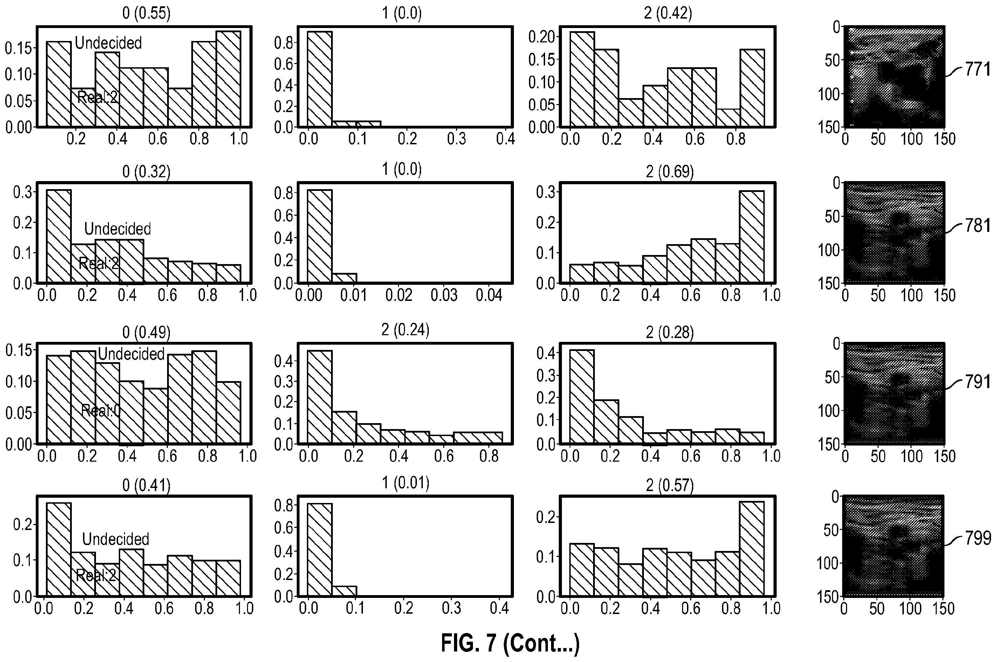

Figure 7 shows examples 700 from use of an embodiment to perform a deep vein thrombosis (DVT) examination for images with low classification confidence and the observed likelihood for different class predictions.

There is shown examples for images 701, 711, 721, 731, 741, 751, 761, 771, 781, 791, 799 where a deep vein thrombosis plane detection algorithm refused to predict because of low confidence. Class likelihoods 707, 708, 709 are shown in the histograms 702, 703, 704 for the individual classes, where right 709 means likely and left 707 means less likely and the axes being likelihood 705 (y-axis) against class 706 (x-axis).

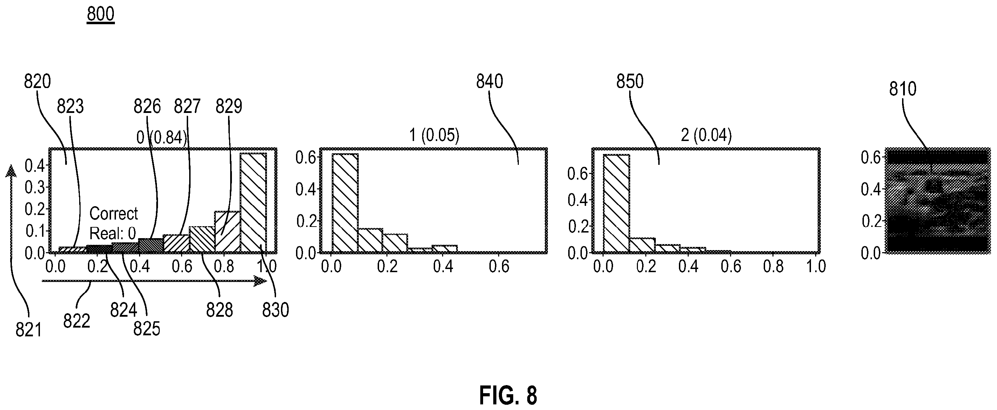

Referring now to Figure 8, there is shown an example 800 for a confident class prediction according to an embodiment.

In Figure 8, there is shown an example 800 for a confident prediction of class 0 (confidence is 0.84 in this case, confidence range [0,1]). The figure shows the confidence classification 822 along the x-axis and the value of the confidence prediction 821 along the y axis in each histogram 820, 840, 850 for a given image 810. In the histogram 820 showing the classification for which there is a high confidence prediction, the histogram shows bars 823, 824, 825, 826, 827, 829, 830 having difference confidence values 821 and the bar 829 having a value indicative of a high confidence can be used to show that the classification 820 is most likely the correct output as it is made with a high confidence by the model.

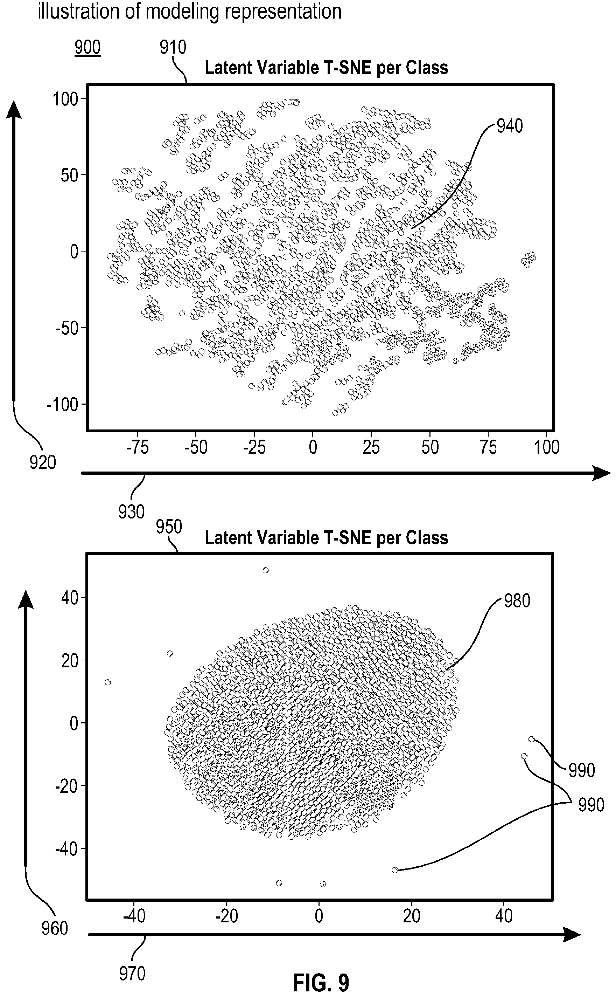

Referring now to Figure 9, there are shown two representations of the data used in an embodiment: one representation 910 before probabilistic modelling of a three-class deep vein thrombosis classification network, and another representation 950 after probabilistic modelling.

Two t-Distributed Stochastic Neighbour Embedding (or "t-SNE") projection plots 900 of the latent space of the deep vein thrombosis plane detection network, as shown in Figure 9, show that distances are better represented than before probabilistic modelling.

Before probabilistic modelling of a three-class deep vein thrombosis classification network the distribution 940 using t-SNE on both axes 920, 930 is shown in representation 910. After probabilistic modelling, the representation 950 using t-SNE on both axes 960, 970 shows that distances are likely to become interpretable as an uncertainty metric in the high dimensional distribution 950, 990 of the latent space.

Random number generators are at the core of probabilistic modelling. Whenever a sample from the learned probability distribution is required, a random number generator is used within discrete limits.

Using the confidence prediction output/metric in at least one embodiment is straightforward: if an image produces output with a lower confidence than acceptable (i.e. some user-defined threshold), then the system doesn't accept it for evaluation. The graph in Figure 8, for example, is generated by the embodiment represented to exclude images in the test set that are predicted to have a lower confidence than given on the x-axis. This causes the images predicted to output low confidence results to be rejected/filtered by the system to increase performance metrics by restricting input data to only that which is predicted to obtain higher confidence output, based on a predetermined confidence threshold. As the predetermined required/filtering confidence threshold is increased, the confidence associated with the output results also increases.

The latent space in a deep learning neural network is a section of memory containing the output of a selected layer, usually the most compressed hidden network layer before classification/decoding, in which the output of previous network layers is encoded. It is a high-dimensional feature space that aims to optimally separate encoded features of the training data set. Encoded means projected/converted to this space through convolutional layers and non-linear activation functions. The optimisation of this projection is only done on the training set (i.e. network training) by employing the back-propagation algorithm and optimisation methods (e.g. gradient decent or the Adam optimiser). The better this training data is distributed across the target domains, the better this feature representation will work for unseen test data. T-SNE (as described in Maaten LV, Hinton G. Visualizing data using t-SNE. Journal of machine learning research. 2008;9(Nov):2579-605, PCA (principle component analysis) (as described in Wold S, Esbensen K, Geladi P. Principal component analysis. Chemometrics and intelligent laboratory systems. 1987 Aug 1;2(1-3):37-52) and UMAP (as described in McInnes L, Healy J, Melville J. Umap: Uniform manifold approximation and projection for dimension reduction. arXiv preprint arXiv:1802.03426. 2018 Feb 9) plots are often used to give a visual 2D/3D representation of this space as shown in Figure 9. While these plots are a very crude approximation for the high-dimensional latent/decision space, they give some idea about how well the features actually separate. A standard neural network forms this latent space only through point predictions, i.e. there could be anything 'unseen' in the white spaces between the dots in Figure 9 (left representation 910). Embodiments form this space through stochastic variational inference, i.e. Figure 9 (right representation 950) thus should actually be a mapping of continuous probability functions (no white space between the points but likelihoods, i.e. a better representation of this would be blurry instead of discrete points). If an unseen test image would land in any of the white spaces, one can calculate a likelihood of it being a particular class by evaluating the joint probability density function at that location, which is the confidence score of some embodiments. In a normal network, unseen sample classification can be compared to inverse Softmax-scaled Euclidean distance evaluation to the centroid of the locations of the samples in the training data. This is also usable in a similar way, but all the confidence scores would be task-specific and squashed into a range between 0.98 and 0.9999, i.e. a potentially non-linear scaling to [0,1] would need to be found for each task separately.

Typically, a latent space is "compressed", i.e. the memory contains a layer having different (smaller) dimensions to the input and/or output layers of the neural network. In the described case typically 22,500 pixels are "compressed to 128 dimensions of latent space. But in other embodiments "compression" can also be 22,500 pixels into 90,000+ latent dimensions, for example for use in networks that perform several tasks at once (i.e. segmentation, classification, open/closed evaluation).

There can be multiple latent spaces for a network. Each of these latent spaces represents different outputs/results from the neurons of the preceding neural network layers for a given input. The encodings after each preceding layer are just different (weaker) representations of the same space, i.e. the last layer's space in case of classification and central bottleneck in case of auto-encoding.

The training of the probability density function (PDF) is based on minimising the Kullback-Leibler divergence between an initial estimate and the real distribution, thus maximising the lower bound on the evidence (ELBO) between the weight distributions of the observed latent locations and a small network that predicts the scale of the PDF at this location. This process is achieved through stochastic variational inference, which approximates the real posterior distribution of the observed variables.

In the above described example embodiment, the output of the neural network layer is the latent space feature representation shown in Figure 9. Practically, for the given classification example, the following process is performed:
1. The input is encoded to a specific point location in the latent space.
2. During training, the latent space is observed to determine how it forms (it is optimised to (substantially optimally) support the classification task it is trained for) and a model is generated for the expected probability density at predicted point locations in the latent space.
3. During testing, the input image is encoded to a point location in the optimised latent space.
4. To evaluate robustness, the probability density function is used for this location in the latent space. This function outputs a measure of the extent to which changes to the point location are reasonable.

The probability density function receives any random number as an input, and it outputs a 'reasonable' new representation of the given latent vector that should still yield the same classification result. This output is similar to being offset from the original latent vector but the scale of the offsets are defined by the observed continuous approximation of the real probability density function at these locations (through stochastic variational inference). The real test is how correct the approximation of the real probability density function (PDF) is at this location.

If the sample is close to a location observed in the training set, a large number of 'offsets' will not change the classification result because the PDF will model the decision boundaries substantially accurately and will not allow offsets that would leak into other class feature clusters, i.e. if one asks this model to generate an output one hundred times using the same image, one will get the same answer one hundred times.

If the image is more 'unusual' for the network, compared to the previously observed training set, the PDF decision boundaries would not be very accurate and it will likely propose latent vectors that lead to different classifications being output from the model. In this case, the trained model is not robust at these locations and, simplistically, if one for example asks the model one hundred times using this same input image one might get as answers "class I" eighty times and "class II" twenty times, so one can assert that the model is 80% accurate in this location; i.e. 80% certain about the input being "class I".

In the described embodiments, there is no observation of the effects on the output of the layers prior to the latent space. These previous layers are fixed and have been trained previously as simple point predictors. Thus, the latent space is already established, so the embodiments proposed only replace the last part of the network with a probabilistic model - this can have the advantage that if the original training data is not available, but the trained weights of a model are, the model can still be extended using the approach of this embodiment. The effect being studied is whether the injection of the random offsets results in massive changes in the interpretation (i.e. classification) of the latent space. The latent space is a vector of values. These are all connected to as many output units as there are classes for the classification task. The output of these units are continuous real values, aka. logits. Logits are converted with e.g. a "Softmax" function into a space between [0,1]. After "Softmax" the result is a vector with the same number of values (between [0,1]) as there are classes. The index of the highest value in this vector defines the predicted class (argmax). The effect being studied is if the argmax index in this vector changes when disturbing the network with samples from the learned PDF at he given latent location. The described embodiments do not inject random noise, but noise suitable for the given location in the latent space. Adding just random numbers to the latent vector does not make much sense, since the latent space is not Euclidean. This means for example that adding 0.0000001 to a selected value might move a location in the latent space to the other side of this latent universe while adding 1.000.000 to another entry might only move a location by a very small amount. There is a simpler way to model Gaussian 'noise' in the latent space, which is by randomly deactivating output units in the layers of a neural network. This is known as Monte Carlo dropout sampling, i.e. one excludes a certain number of random neurons during prediction, which is inferior in experiments to the method described above.

In an embodiment, to perform verification of performance, the low confident predictions are filtered from the test data. If the performance goes up, the right images, i.e. potentially wrongly predicted/input, i.e. most unusual for the network given the previously seen training examples, are rejected. In a real-world scenario this can guide an operator to acquire the most model-compliant image given a realistic model confidence expectation. By increasing model-compliance, expectation can scale with required image acquisition time exponentially, i.e. 99% model compliance might not be possible for most patients, while 80-90% might be feasible dependant on the acquired semantic proximity to the training data.

By modelling only a part of a convolutional neural network, embodiments can force a deep-learning approach to make predictions only if a certain network confidence is reached by filtering data input for following interpretation using expected confidence. This confidence is not necessarily related to human uncertainty and/or image quality, instead in embodiments "confidence" is more related to similarity with the previously seen training data.

In embodiments, there is likely to be an exponential relationship between desired network confidence and scan time.

By modelling a small part of the latent space with (continuous) probabilistic techniques, network predictions can be sampled and tested for robustness. A derived uncertainty metric can subsequently be used to reject network input that will lead to predictions below a user-expected decision confidence.

The method of at least some embodiments provides users of deep neural networks with a control mechanism that guarantees a desired level of prediction confidence. This can be particularly useful in real-time applications, e.g. image acquisition and classification, where viewpoints can be revisited interactively until the optimal input has been found for maximum network prediction confidence. This approach can augment any deep learning implementation that uses an expressive and small (<<50k values) latent space and boost sensitivity and specificity of these methods to almost 100%.

Any system feature, as described herein, may also be provided as a method feature, and vice versa. As used herein, means plus function features may be expressed alternatively in terms of their corresponding structure.

Any feature in one aspect may be applied to other aspects, in any appropriate combination.

## Claims

1. A computer-implemented method of filtering input data to a trained radiological image classification neural network (320, 330, 360) **characterised by** comprising the steps of:
receiving input data for the trained radiological image classification neural network (320, 330, 360);
generating a prediction for the confidence value for the output of the trained radiological image classification neural network (320, 330, 360) ;
determining whether the predicted confidence value exceeds a predetermined confidence threshold and only permitting the trained radiological image classification neural network (320, 330, 360) to process input data that exceeds the predetermined confidence threshold;
wherein the step of generating the prediction for the confidence value for the output of a trained radiological image classification neural network having a given input comprises the steps of:
using a probabilistic model (350) to generate a prediction of confidence for each of one or more input data to the trained radiological image classification neural network (320, 330, 360); and
wherein the probabilistic model is generated by executing the steps of:
observing the latent space (330) of the trained radiological image classification neural network (320, 330, 360) during inference of the trained radiological image classification neural network (320, 330, 360) and generating observations (340) of the latent space (330); and
generating a probabilistic model (350) of the latent space (330) of the trained radiological image classification neural network (320, 330, 360) using the (340) observations of the latent space (330).

2. The computer-implemented method of claim 1, wherein generating the probabilistic model (350) of the latent space (330) comprises using a continuous probabilistic method for allowing a generation of variants of data in the latent space (330) that are semantically close to an initial observation.

3. The computer-implemented method of claim 2, wherein the continuous probabilistic method comprises stochastic variational inference.

4. The computer-implemented method of any one preceding claim wherein the radiological image classification neural network (320, 330, 360) is an ultrasound image classification neural network.

5. The computer-implemented method of any of claims 1 to 3, wherein the radiological image classification neural network (320, 330, 360) is an x-ray image classification neural network.

6. The computer-implemented method of claim 1, further comprising receiving the input data received by the trained radiological image classification neural network (320, 330, 360) during the inference of the trained radiological image classification neural network (320, 330, 360); and wherein the generating of the probabilistic model of the latent space of the trained neural network using the observations of the latent space comprises generating the probabilistic model of the latent space of the trained radiological image classification neural network (320, 330, 360) using the observations (340) of the latent space (330) and the input data received by the trained radiological image classification neural network during inference.

7. The computer-implemented method of claim 6, further comprising receiving the output of the trained radiological image classification neural network (320, 330, 360) during inference of the trained radiological image classification neural network (320, 330, 360); and wherein the generating of the probabilistic model of the latent space of the trained radiological image classification neural network using the observations (340) of the latent space comprises generating the probabilistic model of the latent space of the trained radiological image classification neural network using the observations (340) of the latent space and the input data received by the trained neural network during inference and the output of the trained neural network during inference of the trained neural network.

8. The computer-implemented method of claim 1, wherein using the probabilistic model comprises generating variants of data in the latent space that are semantically close to an initial observation of the latent space of the transformed input data.

9. The computer-implemented method of claim 8, further comprising injecting the variants back into the trained radiological image classification network.

10. The computer-implemented method of claim 9, further comprising observing the outputs of the radiological image classification network based on the injected variants, wherein frequent changes in the output (450) are assumed to indicate uncertainty whereas no changes or minor changes are assumed to indicate robust decision making.

11. A computer program product comprising instructions which, when the program is executed by a computer, cause the computer to perform the method of any preceding claim.

12. A system comprising one or more processors operated to perform the method of any one of claims 1 to 10 or execute the computer program product of claim 11.

## Patentansprüche

1. Computerimplementiertes Verfahren zum Filtern von Eingangsdaten in ein trainiertes neuronales Netz (320, 330, 360) zur Klassifizierung radiologischer Bilder, **dadurch gekennzeichnet, dass** es die folgenden Schritte umfasst:
Empfangen von Eingangsdaten für das trainierte neuronale Netz (320, 330, 360) zur Klassifizierung radiologischer Bilder;
Erzeugen einer Vorhersage für den Konfidenzwert für die Ausgabe des trainierten neuronalen Netzes (320, 330, 360) zur Klassifizierung radiologischer Bilder;
Bestimmen, ob der vorhergesagte Konfidenzwert einen vorbestimmten Konfidenzschwellenwert überschreitet, und nur Zulassen, dass das trainierte neuronale Netz (320, 330, 360) zur Klassifizierung radiologischer Bilder Eingangsdaten verarbeitet, die den vorbestimmten Konfidenzschwellenwert überschreiten;
wobei der Schritt des Erzeugens der Vorhersage für den Konfidenzwert für die Ausgabe eines trainierten neuronalen Netzes zur Klassifizierung radiologischer Bilder mit einem gegebenen Eingang die folgenden Schritte umfasst:
Verwenden eines Wahrscheinlichkeitsmodells (350), um eine Konfidenzvorhersage für jedes von einem oder mehreren Eingangsdaten in das trainierte neuronale Netz (320, 330, 360) zur Klassifizierung radiologischer Bilder zu erzeugen; und
wobei das Wahrscheinlichkeitsmodell durch Ausführen der folgenden Schritte erzeugt wird:
Beobachten des latenten Raums (330) des trainierten neuronalen Netzes (320, 330, 360) zur Klassifizierung radiologischer Bilder während der Inferenz des trainierten neuronalen Netzes (320, 330, 360) zur Klassifizierung radiologischer Bilder und Erzeugen von Beobachtungen (340) des latenten Raums (330); und
Erzeugen eines Wahrscheinlichkeitsmodells (350) des latenten Raums (330) des trainierten neuronalen Netzes (320, 330, 360) zur Klassifizierung radiologischer Bilder unter Verwendung der (340) Beobachtungen des latenten Raums (330).

2. Computerimplementiertes Verfahren nach Anspruch 1, wobei das Erzeugen des Wahrscheinlichkeitsmodells (350) des latenten Raums (330) Verwenden eines kontinuierlichen Wahrscheinlichkeitsverfahrens zum Ermöglichen einer Erzeugung von Varianten von Daten in dem latenten Raum (330) umfasst, die einer anfänglichen Beobachtung semantisch nahe sind.

3. Computerimplementiertes Verfahren nach Anspruch 2, wobei das kontinuierliche Wahrscheinlichkeitsverfahren stochastische Variationsinferenz umfasst.

4. Computerimplementiertes Verfahren nach einem vorhergehenden Anspruch, wobei das neuronale Netz (320, 330, 360) zur Klassifizierung radiologischer Bilder ein neuronales Netz zur Klassifizierung von Ultraschallbildern ist.

5. Computerimplementiertes Verfahren nach einem der Ansprüche 1 bis 3, wobei das neuronale Netz (320, 330, 360) zur Klassifizierung radiologischer Bilder ein neuronales Netz zur Klassifizierung von Röntgenbildern ist.

6. Computerimplementiertes Verfahren nach Anspruch 1, ferner umfassend Empfangen der Eingangsdaten, die durch das trainierte neuronale Netz (320, 330, 360) zur Klassifizierung radiologischer Bilder während der Inferenz des trainierten neuronalen Netzes (320, 330, 360) zur Klassifizierung radiologischer Bilder empfangen werden; und wobei das Erzeugen des Wahrscheinlichkeitsmodells des latenten Raums des trainierten neuronalen Netzes unter Verwendung der Beobachtungen des latenten Raums Erzeugen des Wahrscheinlichkeitsmodells des latenten Raums des trainierten neuronalen Netzes (320, 330, 360) zur Klassifizierung radiologischer Bilder unter Verwendung der Beobachtungen (340) des latenten Raums (330) und der Eingangsdaten, die durch das trainierte neuronale Netz zur Klassifizierung radiologischer Bilder während der Inferenz empfangen werden, umfasst.

7. Computerimplementiertes Verfahren nach Anspruch 6, ferner umfassend Empfangen der Ausgabe, des trainierten neuronalen Netzes (320, 330, 360) zur Klassifizierung radiologischer Bilder während der Inferenz des trainierten neuronalen Netzes (320, 330, 360) zur Klassifizierung radiologischer Bilder; und wobei das Erzeugen des Wahrscheinlichkeitsmodells des latenten Raums des trainierten neuronalen Netzes zur Klassifizierung radiologischer Bilder unter Verwendung der Beobachtungen (340) des latenten Raums Erzeugen des Wahrscheinlichkeitsmodells des latenten Raums des trainierten neuronalen Netzes zur Klassifizierung radiologischer Bilder unter Verwendung der Beobachtungen (340) des latenten Raums und der Eingangsdaten, die durch das trainierte neuronale Netz während der Inferenz empfangen werden, und der Ausgabe des trainierten neuronalen Netzes während der Inferenz des trainierten neuronalen Netzes umfasst.

8. Computerimplementiertes Verfahren nach Anspruch 1, wobei das Verwenden des Wahrscheinlichkeitsmodells Erzeugen von Varianten von Daten in dem latenten Raum umfasst, die einer anfänglichen Beobachtung des latenten Raums der transformierten Eingangsdaten semantisch nahe sind.

9. Computerimplementiertes Verfahren nach Anspruch 8, ferner umfassend Einspeisen der Varianten zurück in das trainierte Netz zur Klassifizierung radiologische Bilder.

10. Computerimplementiertes Verfahren nach Anspruch 9, ferner umfassend Beobachten der Ausgaben des Netzes zur Klassifizierung radiologischer Bilder basierend auf den eingespeisten Varianten, wobei angenommen wird, dass häufige Änderungen in der Ausgabe (450) Unsicherheit angeben, während angenommen wird, dass keine Änderungen oder geringfügige Änderungen eine robuste Entscheidungsfindung angeben.

11. Computerprogrammprodukt, umfassend Anweisungen, die, wenn das Programm durch einen Computer ausgeführt wird, den Computer veranlassen, das Verfahren nach einem vorhergehenden Anspruch durchzuführen.

12. System, umfassend einen oder mehrere Prozessoren, die betrieben werden, um das Verfahren nach einem der Ansprüche 1 bis 10 durchzuführen oder das Computerprogrammprodukt nach Anspruch 11 auszuführen.

## Revendications

1. Procédé mis en œuvre par ordinateur de filtrage de données d'entrée vers un réseau neuronal formé de classification d'images radiologiques (320, 330, 360), **caractérisé en ce qu'**il comprend les étapes de :
réception de données d'entrée pour le réseau neuronal formé de classification d'images radiologiques (320, 330, 360) ;
génération d'une prédiction de la valeur de confiance pour la sortie du réseau neuronal formé de classification d'images radiologiques (320, 330, 360) ;
détermination si la valeur de confiance prédite dépasse un seuil de confiance prédéterminé et autorisation uniquement au réseau neuronal formé de classification d'images radiologiques (320, 330, 360) de traiter les données d'entrée qui dépassent le seuil de confiance prédéterminé ;
dans lequel l'étape de génération de la prédiction de la valeur de confiance pour la sortie d'un réseau neuronal formé de classification d'images radiologiques ayant une entrée donnée comprenant les étapes de :
utilisation d'un modèle probabiliste (350) pour générer une prédiction de confiance pour chacune d'une ou plusieurs données d'entrée vers le réseau neuronal formé de classification d'images radiologiques (320, 330, 360) ; et
dans lequel le modèle probabiliste est généré en exécutant les étapes de :
observation de l'espace latent (330) du réseau neuronal formé de classification d'images radiologiques (320, 330, 360) pendant l'inférence du réseau neuronal formé de classification d'images radiologiques (320, 330, 360) et génération d'observations (340) de l'espace latent (330) ; et
génération d'un modèle probabiliste (350) de l'espace latent (330) du réseau neuronal formé de classification d'images radiologiques (320, 330, 360) à l'aide des (340) observations de l'espace latent (330).

2. Procédé mis en œuvre par ordinateur selon la revendication 1, dans lequel la génération du modèle probabiliste (350) de l'espace latent (330) comprend l'utilisation d'un procédé probabiliste continu pour permettre une génération de variantes de données dans l'espace latent (330) qui sont sémantiquement proches d'une observation initiale.

3. Procédé mis en œuvre par ordinateur selon la revendication 2, dans lequel le procédé probabiliste continu comprend une inférence variationnelle stochastique.

4. Procédé mis en œuvre par ordinateur selon l'une quelconque des revendications précédentes, dans lequel le réseau neuronal de classification d'images radiologiques (320, 330, 360) est un réseau neuronal de classification d'images ultrasonores.

5. Procédé mis en œuvre par ordinateur selon l'une quelconque des revendications 1 à 3, dans lequel le réseau neuronal de classification d'images radiologiques (320, 330, 360) est un réseau neuronal de classification d'images par rayon x.

6. Procédé mis en œuvre par ordinateur selon la revendication 1, comprenant en outre la réception des données d'entrée reçues par le réseau neuronal formé de classification d'images radiologiques (320, 330, 360) pendant l'inférence du réseau neuronal formé de classification d'images radiologiques (320, 330, 360) ; et dans lequel la génération du modèle probabiliste de l'espace latent du réseau neuronal formé à l'aide des observations de l'espace latent comprend la génération du modèle probabiliste de l'espace latent du réseau neuronal formé de classification d'images radiologiques (320, 330, 360) à l'aide des observations (340) de l'espace latent (330) et des données d'entrée reçues par le réseau neuronal formé de classification d'images radiologiques pendant l'inférence.

7. Procédé mis en œuvre par ordinateur selon la revendication 6, comprenant en outre la réception de la sortie du réseau neuronal formé de classification d'images radiologiques (320, 330, 360) pendant l'inférence du réseau neuronal formé de classification d'images radiologiques (320, 330, 360) ; et dans lequel la génération du modèle probabiliste de l'espace latent du réseau neuronal formé de classification d'images radiologiques à l'aide des observations (340) de l'espace latent comprend la génération du modèle probabiliste de l'espace latent du réseau neuronal formé de classification d'images radiologiques à l'aide des observations (340) de l'espace latent et des données d'entrée reçues par le réseau neuronal formé pendant l'inférence et la sortie du réseau neuronal formé pendant l'inférence du réseau neuronal formé.

8. Procédé mis en œuvre par ordinateur selon la revendication 1, dans lequel l'utilisation du modèle probabiliste comprend la génération de variantes de données dans l'espace latent qui sont sémantiquement proches d'une observation initiale de l'espace latent des données d'entrée transformées.

9. Procédé mis en œuvre par ordinateur selon la revendication 8, comprenant en outre la ré-injection des variantes dans le réseau formé de classification d'images radiologiques.

10. Procédé mis en œuvre par ordinateur selon la revendication 9, comprenant en outre l'observation des sorties du réseau de classification d'images radiologiques sur la base des variantes injectées, dans lequel des changements fréquents dans la sortie (450) sont supposés indiquer une incertitude alors que l'absence de changement ou des changements mineurs sont supposés indiquer une prise de décision robuste.

11. Produit de programme informatique comprenant des instructions qui, lorsque le programme est exécuté par un ordinateur, amènent l'ordinateur à effectuer le procédé selon l'une quelconque des revendications précédentes.

12. Système comprenant un ou plusieurs processeurs exploités pour exécuter le procédé selon l'une quelconque des revendications 1 à 10 ou exécuter le produit-programme informatique selon la revendication 11.
